# FASCICULE DE BREVET EUROPEEN

(11) **EP 2 318 784 B1**
(45) Date de publication et mention de la délivrance du brevet: **25.07.2012**
(21) Numéro de dépôt: 09737031.6
(22) Date de dépôt: 25.08.2009
(51) Int. Cl.: F25B 21/00

(54) **GENERATEUR THERMIQUE A MATERIAU MAGNETOCALORIQUE**
MAGNETOKALORISCHES MATERIAL VERWENDENDER WÄRMEGENERATOR
HEAT GENERATOR USING MAGNETOCALORIC MATERIAL

(30) Priorité: 26.08.2008 FR 0804698
(43) Date de publication de la demande: 11.05.2011
(73) Titulaire: Cooltech Applications S.A.S., 67810 Holtzheim (FR)
(72) Inventeur: HEITZLER, Jean-Claude, F-68180 Horbourg-Wihr (FR); MULLER, Christian, F-67000 Strasbourg (FR)
(74) Mandataire: Nithardt, Roland
(86) Numéro de dépôt international: PCT/FR2009/001031
(87) Numéro de publication internationale: WO 2010/023381

(56) Documents cités:
- EP-A1- 1 832 824
- WO-A1-2005/095872
- WO-A1-2007/086638
- WO-A2-2004/114520
- DE-A1- 4 239 935
- FR-A- 997 056
- US-A1- 2006 278 373
- DATABASE WPI Week 19859 Thomson Scientific, London, GB; AN 1985-055250 XP002525788 -& SU 1 105 737 A1 (MOSC POWER INST) 30 juillet 1984 (1984-07-30)
- DATABASE WPI Week 198937 Thomson Scientific, London, GB; AN 1989-269564 XP002567988 -& SU 1 467 339 A1 (KARAGUSOV V I) 23 mars 1989 (1989-03-23)

## Description

### Domaine technique :

La présente invention se rapporte au domaine de la génération d'énergie thermique et concerne plus particulièrement un générateur magnétocalorique comportant au moins un module thermique, ce module thermique comprenant essentiellement un élément magnétocalorique traversé par un volume défini de fluide caloporteur entraîné selon un déplacement alterné à travers l'élément magnétocalorique, de part et d'autre de ce dernier, par l'intermédiaire d'au moins un moyen de circulation disposé dans le module thermique, ledit générateur magnétocalorique comportant également un arrangement magnétique agencé pour soumettre alternativement chaque élément magnétocalorique à une variation de champ magnétique et créer alternativement, dans ledit élément magnétocalorique, un cycle d'échauffement et un cycle de refroidissement, générant la création puis le maintien d'un gradient de température entre les deux extrémités opposées dudit élément magnétocalorique, le déplacement alterné du fluide caloporteur étant synchronisé avec la variation du champ magnétique, ledit moyen de circulation étant mis en mouvement par un moyen de manoeuvre sans contact apte à générer un champ magnétique variable, ledit moyen de circulation étant sensible audit champ magnétique variable, le couplage magnétique créé entre ledit moyen de manoeuvre sans contact et ledit moyen de circulation entraînant le déplacement ou la déformation dudit moyen de circulation.

### Technique antérieure :

La technologie du froid magnétique à température ambiante est connue depuis plus d'une vingtaine d'années et on sait les avantages qu'elle apporte en termes d'écologie et de développement durable. On connaît également ses limites quant à sa puissance calorifique utile et à son rendement. Dès lors, les recherches menées dans ce domaine tendent toutes à améliorer les performances d'un tel générateur, en jouant sur les différents paramètres, tels que la puissance d'aimantation, les performances de l'élément magnétocalorique, la surface d'échange entre le fluide caloporteur et les éléments magnétocaloriques, les performances des échangeurs de chaleur, etc.

La demande de brevet français n° 07 / 07612 au nom de la demanderesse décrit un générateur magnétocalorique dans lequel l'énergie thermique générée par des éléments magnétocaloriques est échangée avec un fluide caloporteur mis en mouvement à travers lesdits éléments magnétocaloriques par l'intermédiaire de moyens de circulation. Ces derniers déplacent le fluide caloporteur entre des éléments magnétocaloriques et des chambres d'échange de manière alternée et synchronisée avec la variation d'un champ magnétique entraînant un échauffement puis un refroidissement des éléments magnétocaloriques. Ces moyens de circulation sont sous la forme de pistons entraînés selon un mouvement de va-et-vient par une came de commande comportant un profil de came spécifique.

Ce générateur présente toutefois un inconvénient inhérent à l'entraînement de ces pistons. En effet, cet entraînement est sujet à une usure des éléments en contact, à savoir le profil de came et les pistons, ce qui peut entraîner une dégradation prématurée du rendement du générateur. De plus, il pose des problèmes d'étanchéité entre la chemise des pistons et le mécanisme d'entraînement.

La publication SU 1 105 737 décrit un générateur thermique par compression de gaz cryogénique dans lequel un piston se déplace vers le haut pour comprimer le gaz et l'échauffer puis un autre piston se déplace vers le bas pour repousser le gaz à travers le régénérateur. Néanmoins, il n'est pas précisé par quel moyen les pistons se déplacent. La publication FR 997 056 décrit un appareil de réfrigération selon le préambule de la revendication 1, qui utilise l'effet magnétocalorique d'un matériau ferromagnétique traversé par un fluide caloporteur déplacé par un piston entraîné par un accouplement magnétique.

### Exposé de l'invention :

La présente invention vise à pallier ces inconvénients en proposant un générateur magnétocalorique de construction simple dans lequel, d'une part, les risques de perte d'étanchéité entre la chambre dans laquelle se déplacent les moyens de circulation du fluide, par exemple des pistons, et le moyen de manoeuvre de ces derniers sont évités et, d'autre part, la durée de vie est augmentée et le rendement préservé.

Dans ce but, l'invention concerne un générateur magnétocalorique du genre indiqué en préambule, caractérisé en ce _qu'au moins un moyen de manoeuvre sans contact comporte au moins un élément mobile entraîné par un actionneur, ledit élément mobile présentant des zones aimantées de polarités différentes dont le passage dans une région proche dudit moyen de circulation entraîne le déplacement ou la déformation de ces derniers.

Cette mise en mouvement peut consister en un déplacement selon un mouvement de va-et-vient ou en une déformation, par exemple, le mouvement des moyens de circulation devant entraîner le déplacement du fluide caloporteur dans chaque module thermique.

La mise en oeuvre d'un moyen de manoeuvre sans contact permet de limiter les contacts physiques entre les moyens de circulation du fluide et le moyen de manoeuvre sans contact de ces derniers, ce qui a pour conséquence la garantie d'une étanchéité et une augmentation de la durée de vie de ces éléments grâce à l'absence de tout contact, et donc de toute usure.

Ledit module thermique comporte deux moyens de circulation disposés chacun de part et d'autre de l'élément magnétocalorique, en regard de ce dernier.

Selon l'invention, les deux moyens de circulation dudit module thermique sont entraînés chacun par le moyen de manoeuvre sans contact.

Lorsque le générateur magnétocalorique selon l'invention comporte plus d'un module thermique, ces derniers sont préférentiellement disposés de manière adjacente les uns aux autres, avec les éléments magnétocaloriques alignés ou disposés à un même niveau.

Les zones aimantées de chaque élément mobile peuvent alors être constituées par des aimants permanents et chaque moyen de circulation peut être réalisé, au moins en partie, en un matériau magnétique ou comprendre un tel matériau magnétique.

Selon l'invention, au moins un moyen de circulation dudit module thermique peut être un piston.

En variante, au moins un moyen de circulation dudit module thermique peut être une membrane susceptible de se déformer sous l'effet du champ magnétique du moyen de manoeuvre sans contact, cette déformation entraînant le déplacement du fluide caloporteur dans le module thermique concerné.

Selon l'invention, il est prévu que l'arrangement magnétique constitue le moyen de manoeuvre sans contact. Dans ce cas, un seul moyen de manoeuvre sans contact entraîne le déplacement de l'ensemble des moyens de circulation du générateur magnétocalorique, ce qui limite encore le nombre d'éléments constitutifs du générateur et l'encombrement de ce dernier.

De préférence, l'arrangement magnétique est alors sous la forme d'une structure circulaire disposée à l'intérieur d'un l'anneau formé par les éléments magnétocaloriques et en rotation autour de l'axe central des éléments magnétocaloriques, ladite structure circulaire comportant des zones aimantées de polarités différentes et les moyens de circulation sont réalisés, au moins en partie, en un matériau magnétique ou comprennent un tel matériau magnétique. La rotation de la structure circulaire peut être continue ou non et alternative ou non. Elle permet à la fois de mettre en mouvement les moyens de circulation et de soumettre les éléments magnétocaloriques à un champ magnétique variable.

De préférence, les modules thermiques peuvent comporter chacun un renfoncement au niveau des éléments magnétocaloriques, de manière à former un renfoncement circulaire dans lequel circulent les zones aimantées de l'arrangement magnétique lors de sa rotation. Ce renfoncement permet de rapprocher les zones aimantées de l'arrangement magnétique et les moyens de circulation et d'assurer ainsi un meilleur entraînement de ces derniers.

Dans le cas où le générateur comporte au moins deux modules thermiques, il peut être prévu que chaque module thermique est en communication fluidique avec une chambre d'échange chaude commune et une chambre d'échange froide commune de sorte que le déplacement alternatif et simultané des moyens de circulation dans chaque module thermique déplace alternativement le fluide caloporteur à travers les éléments magnétocaloriques et respectivement en direction de la chambre d'échange chaude commune lors d'un cycle de réchauffement et en direction de la chambre d'échange froide commune lors d'un cycle de refroidissement.

### Description sommaire des dessins:

La présente invention et ses avantages apparaîtront mieux dans la description suivante d'un mode de réalisation donné à titre d'exemple non limitatif, en référence aux dessins annexés, dans lesquels:
- la figure 1 est une vue en perspective d'un générateur magnétocalorique ne faisant pas partie de l'invention,
- la figure 2 est une vue en coupe selon l'axe central du générateur représenté à la figure 1,
- la figure 3 est une vue représentant un module thermique ne faisant pas partie de l'invention illustrant les positions successives des moyens de circulation du fluide caloporteur intégrés dans ce module thermique,
- les figures 4A et 4B sont des représentations schématiques de deux modules thermiques d'un générateur magnétocalorique linéaire ne faisant pas partie de l'invention, dans lesquels les pistons formant les moyens de circulation sont dans deux positions différentes,
- les figures 5A et 5B sont des vues similaires à celles des figures 4A et 4B dans lesquelles les modules thermiques sont munis d'ouvertures pour une communication fluidique avec des chambres d'échange communes, ne faisant pas partie de l'invention,
- la figure 6 est une vue en perspective représentant schématiquement deux modules thermiques d'un générateur magnétocalorique linéaire ne faisant pas partie de l'invention,
- les figures 7A et 7B sont des vues en plan des modules thermiques représentés à la figure 6, dans deux positions différentes des pistons formant les moyens de circulation,
- la figure 8 est une vue en perspective simplifiée d'un générateur circulaire suivant l'invention dans lequel l'arrangement magnétique forme simultanément le moyen de manoeuvre sans contact,
- les figures 9A et 9B sont des vues en plan du générateur de la figure 8, dans lesquelles les pistons formant les moyens de circulation sont représentés dans deux positions extrêmes différentes, et
- la figure 10 est une vue similaire à celle des figures 9A et 9B dans laquelle les modules thermiques suivant l'invention sont munis d'ouvertures pour une communication fluidique avec des chambres d'échange communes.

Différentes manières de réaliser l'invention:

Dans les exemples de réalisation illustrés, les pièces ou parties identiques portent les mêmes références numériques.

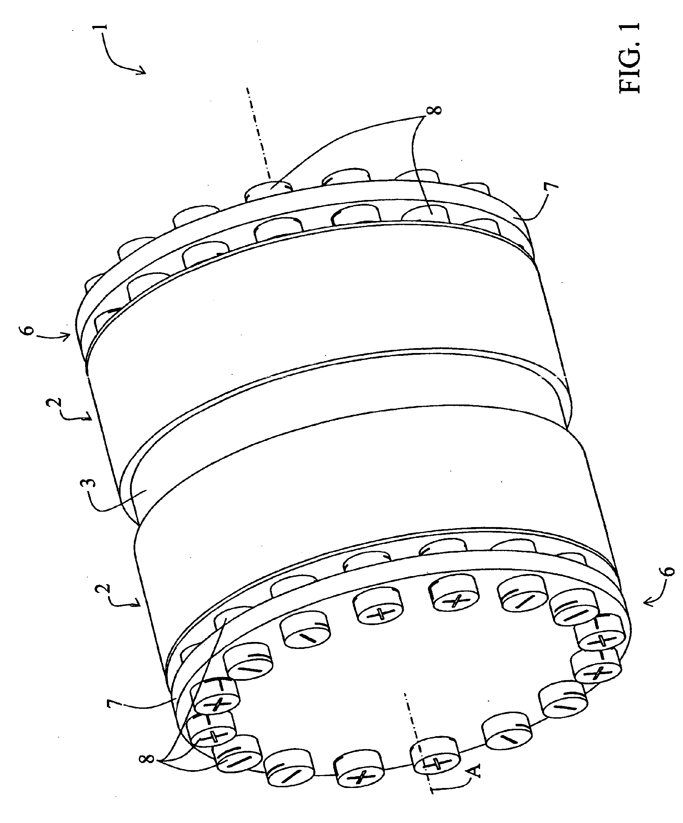

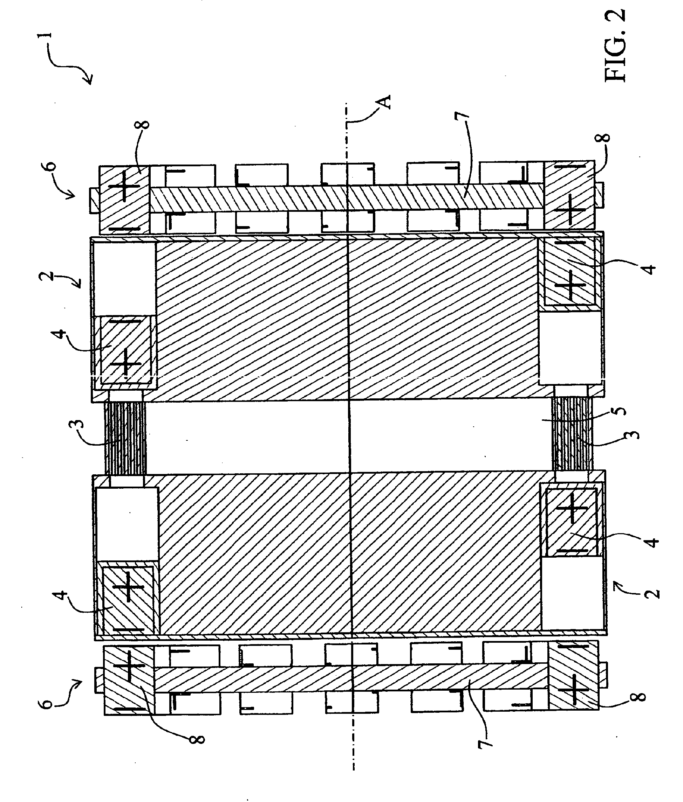

La figure 1 est une vue en perspective d'un générateur magnétocalorique 1 présentant une structure circulaire. Ce générateur est constitué par des modules thermiques 2 disposés en cercle autour d'un axe central A qui constitue également l'axe central du générateur magnétocalorique 1. Ces modules thermiques 2 comprennent chacun au moins un élément magnétocalorique 3, l'ensemble desdits éléments magnétocaloriques 3 étant également disposés en cercle autour de l'axe central A et destinés à d'être traversé par un volume défini de fluide caloporteur entraîné selon un déplacement alterné, de part et d'autre de ces derniers, par l'intermédiaire de deux moyens de circulation 4 disposés dans le module thermique 2 de part et d'autre de l'élément magnétocalorique 3 et en regard de ce dernier (cf. figure 2).

Dans le générateur magnétocalorique 1 représenté à la figure 2, ces moyens de circulation 4 sont sous la forme de pistons. Le générateur magnétocalorique comporte également un arrangement magnétique 5 agencé pour soumettre alternativement chaque élément magnétocalorique 3 à une variation de champ magnétique et créer alternativement, dans chaque élément magnétocalorique 3, un cycle d'échauffement et un cycle de refroidissement générant la création puis le maintien d'un gradient de température entre les deux extrémités opposées de chaque élément magnétocalorique 3. En outre, le déplacement alterné du fluide caloporteur est synchronisé avec la variation du champ magnétique.

De manière avantageuse, chaque ensemble de pistons 4 situé du même côté par rapport aux éléments magnétocaloriques 3 est entraîné dans deux directions opposées par un moyen de manoeuvre sans contact 6 sans contact spécifique réalisé sous la forme d'un disque 7 formant un élément mobile, ce dernier étant muni d'aimants permanents 8.

Il est prévu egalement qu'un seul ensemble de moyens de circulation 4 ou de pistons est entraîné par un moyen de manoeuvre 6 sans contact et que l'autre ensemble est manoeuvré par tout autre moyen. Il peut également être prévu que chaque ensemble est manoeuvré par un moyen de manoeuvre sans contact de même configuration ou de configuration différente.

L'élément magnétocalorique 3 est perméable au fluide caloporteur et peut être constitué par un ou plusieurs matériaux magnétocaloriques. Il comporte des passages de fluide débouchant qui peuvent être constitués par les pores d'un matériau poreux, des mini ou micro-canaux usinés dans un bloc plein ou obtenus par un assemblage de plaques rainurées superposées, par exemple.

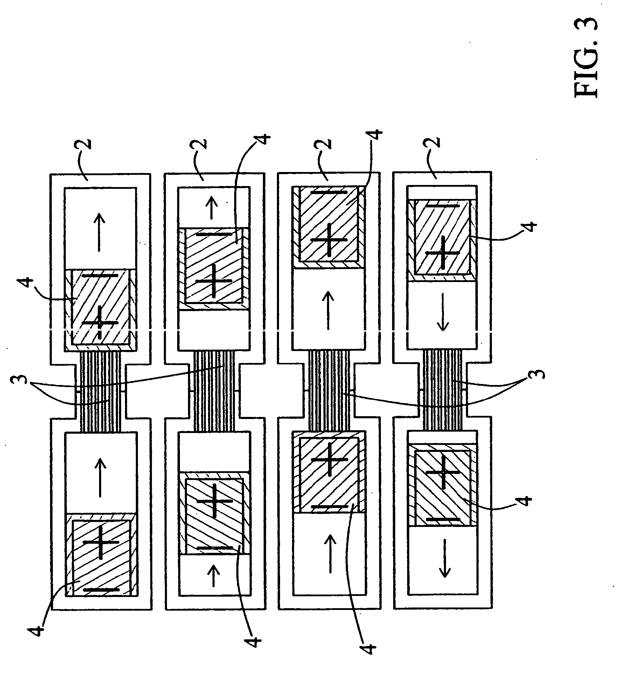

Dans le générateur magnétocalorique 1 représenté à la figure 1, l'élément mobile 7, réalisé sous la forme d'un disque et comportant des aimants 8 dont la polarité est alternée, est mis en rotation autour de l'axe central A des éléments magnétocaloriques 3. Les pistons 4 présentent quant à eux également une polarité alternée, de telle sorte que la rotation du disque 7 entraîne successivement une attraction et une répulsion des pistons 4, ce qui entraîne simultanément un déplacement du fluide dans chaque module thermique 2 à travers les éléments magnétocaloriques 3. Bien entendu, le déplacement des pistons 4 est réalisé de manière coordonnée au niveau de chaque module thermique 2 de sorte que lorsqu'un piston 4 est situé contre l'élément magnétocalorique 3, l'autre piston est écarté au maximum de l'élément magnétocalorique dans le module thermique 2, et inversement. La figure 2 montre à cet effet les deux positions extrêmes que peuvent prendre les pistons 4 et la figure 3 représente les différentes positions successives des deux pistons 4. Lorsqu'un aimant 8 de pôle positif du disque 7 est face à un piston 4 comportant un pôle négatif, ce dernier est attiré et s'il est face à un piston 4 comportant un pôle positif, il le repousse. De la même manière, lorsqu'un aimant 8 de pôle négatif du disque 7 est face à un piston 4 comportant un pôle positif, ce dernier est attiré et s'il est face à un piston 4 comportant un pôle négatif, il le repousse. La rotation du disque 7 entraîne ainsi un déplacement des pistons 4 selon un mouvement de va-et-vient.

La figure 3 indique le sens de déplacement des pistons 4 par les flèches dessinées dans les modules thermiques 2. Les trois premiers modules thermiques 2 illustrent un déplacement des pistons 4 vers la droite, et donc un déplacement du fluide caloporteur vers la droite pendant un cycle d'échauffement ou de refroidissement de l'élément magnétocalorique 3. Lorsque les pistons 4 ont atteint leur position extrême représentée dans le troisième module thermique 2, ils sont manoeuvrés de manière à et déplacés dans le sens contraire, tandis que l'élément magnétocalorique 3 est soumis à un nouveau cycle de refroidissement ou d'échauffement.

Dans une variante non représentée, le disque 7 peut être fixe et comporter des bobines électriques à la place des aimants permanents 8.

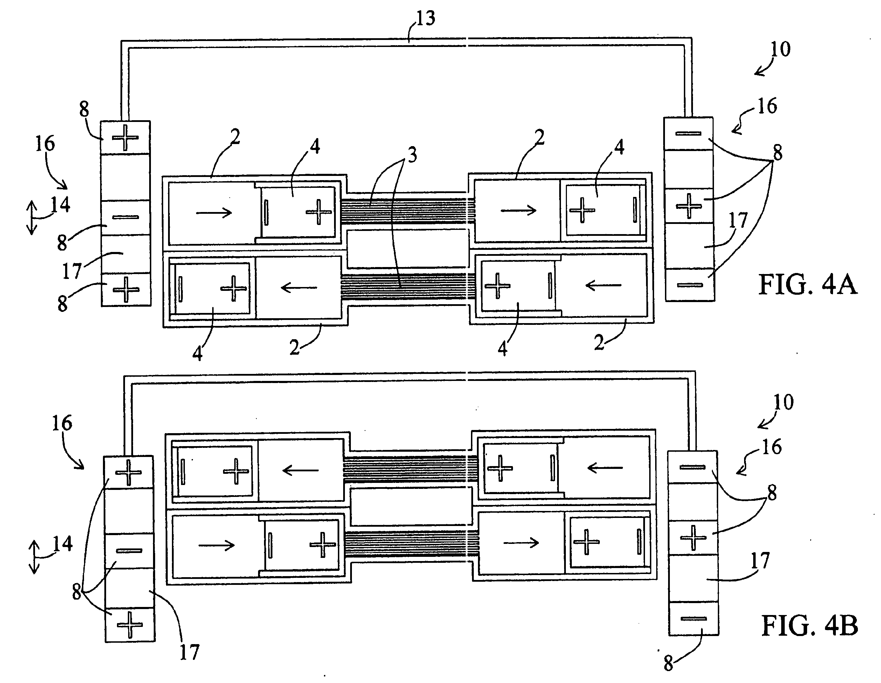

Les figures 4A et 4B représentent un mode de réalisation de générateur magnétocalorique 10 comportant une structure linéaire. Le moyen de manoeuvre 6 sans contact est sous la forme d'un élément mobile 17 linéaire représenté dans deux positions successives. Cet élément mobile 17 est muni d'aimants permanents 8 de polarités différentes et alternées qui interagissent avec les pistons 4 des modules thermiques 2 également polarisés de manière alternée.

Les pistons 4 sont manoeuvrés par deux moyens de manoeuvre 16 sans contact sous forme d'éléments mobiles 17 de configuration similaire et dont les pôles des aimants permanents 8 sont déterminés en fonction des pôles des pistons 4 formant les moyens de circulation. Ces deux éléments mobiles 17 se translatent selon un mouvement de va-et-vient identifié par les flèches 14 de manière à actionner les pistons 4 dans une direction puis dans l'autre. Dans l'exemple illustré, les éléments mobiles 17 sont reliés l'un à l'autre par une barre 13 couplée à un moyen d'actionnement non représenté et imprimant ce mouvement de va-et-vient. La figure 4A représente les éléments mobiles 17 dans une première position dans laquelle le fluide situé dans le module thermique 2 supérieur de la figure se déplace vers la droite (l'aimant 8 de pôle négatif de l'élément mobile 17 situé à gauche sur la figure repousse le piston 4 de pôle négatif et l'aimant 8 de pôle positif de l'élément mobile 17 situé à droite sur la figure attire le piston 4 de pôle négatif) et le fluide situé dans le module thermique 2 inférieur se déplace vers la gauche. La figure 4B représente les éléments mobiles dans une deuxième position dans laquelle la circulation du fluide est inversée.

Bien que ces figures représentent uniquement deux modules thermiques 2, un générateur magnétocalorique peut en comporter plus . L'homme du métier saura adapter l'élément mobile 7 en conséquence, en le rallongeant et en y intégrant plus d'aimants permanents.

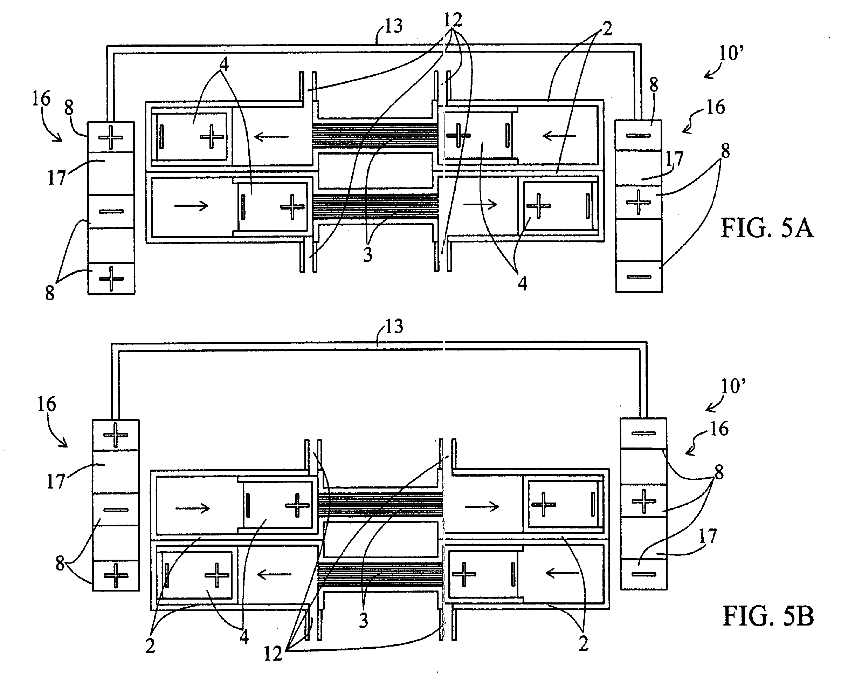

Les figures 5A et 5B représentent une variante du mode de réalisation des figures 4A et 4B dans laquelle le générateur magnétocalorique 10' comporte, au niveau de chaque module thermique 2, deux ouvertures 12 permettant de le relier fluidiquement avec une chambre d'échange commune froide et une chambre d'échange commune chaude (non représentées). Ainsi, à chaque déplacement des moyens de circulation 4, le fluide circulant à travers un élément magnétocalorique 3 en cycle d'échauffement est dirigé vers la chambre d'échange commune chaude et le fluide circulant à travers un élément magnétocalorique 3 subissant un cycle de refroidissement est dirigé vers la chambre d'échange commune froide. Cette configuration permet de faciliter le raccordement à un circuit ou échangeur extérieur.

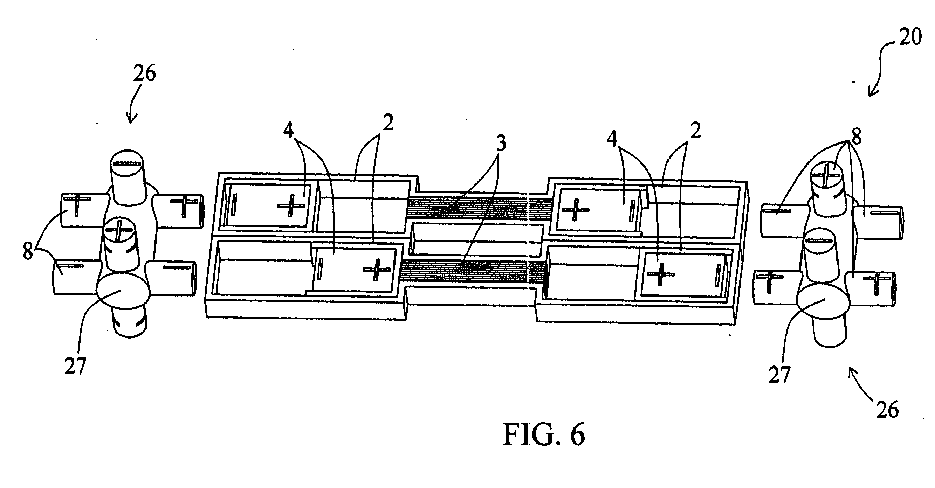

La figure 6 représente un second mode de réalisation de générateur magnétocalorique 20 comportant une structure linéaire dans lequel l'élément mobile 27 comporte plusieurs aimants 8 de polarités différentes et successives disposés en regard de chaque module thermique 2 et décalés selon un angle de 90° l'un par rapport à l'autre, ledit élément mobile est sous la forme d'un arbre 27 disposé perpendiculairement à une extrémité des modules thermiques 2. La rotation de cet arbre 27 sur lui-même entraîne une interaction entre les aimants permanents 8 montés sur ce dernier et chaque piston aimanté 4 formant un moyen de circulation, et donc la circulation du fluide dans les modules thermiques 2. Un changement de direction est réalisé après une rotation de 90° de l'arbre 27. Il peut également être envisagé de disposer uniquement deux aimants de polarités différentes au niveau de chaque module thermique 2 et de mettre en rotation l'arbre 27 dans une direction puis dans la direction opposée pour réaliser le déplacement alterné des pistons 4 dans les modules thermiques 2.

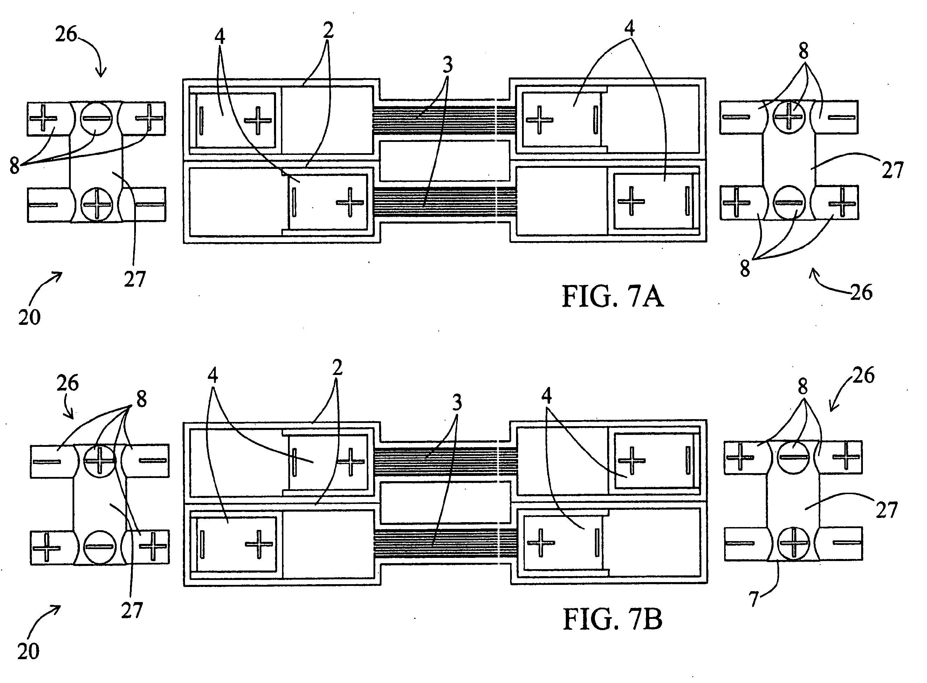

Les figures 7A et 7B représentent une vue en plan de la figure 6, dans deux positons successives de l'arbre 27 formant l'élément mobile, séparées de 90°.

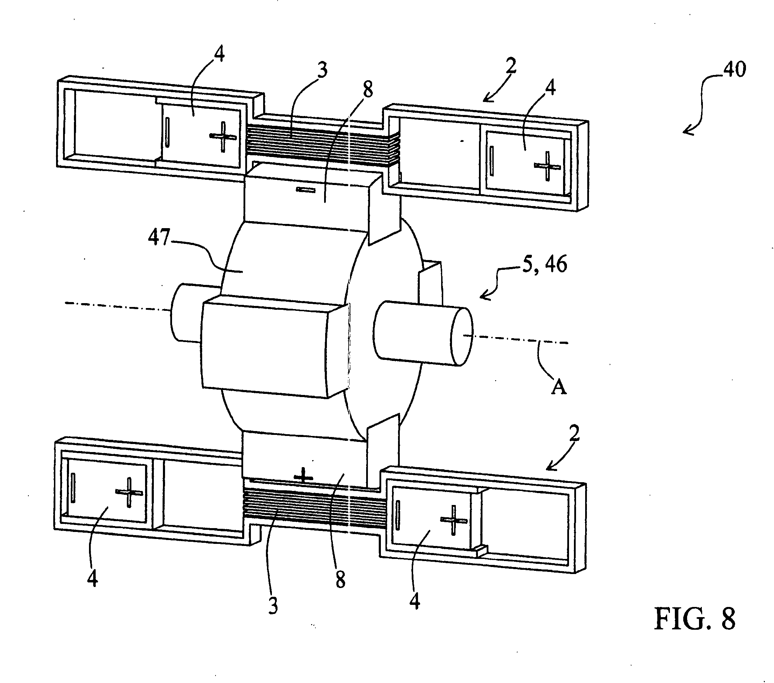

Les figures 8, 9A, 9B et 10 représentent un mode de réalisation suivant l'invention d'un générateur magnétocalorique 40 dans lequel l'arrangement magnétique 5 constitue le moyen de manoeuvre 46 sans contact. Ce mode de réalisation permet de réduire encore le nombre d'éléments constitutifs du générateur magnétocalorique 40 tout en garantissant une étanchéité entre eux ainsi qu'une durée de vie accrue. En effet, l'arrangement magnétique 5 génère la variation de champ magnétique dans les éléments magnétocaloriques 3 et entraîne simultanément le déplacement des pistons 4 intégrés dans les modules thermiques 2.

Le générateur magnétocalorique 40 représenté est de configuration circulaire, c'est-à-dire que les éléments magnétocaloriques 3 sont disposés en cercle autour d'un axe central A, qui forme l'axe central du générateur magnétocalorique 40. L'arrangement magnétique 5 constitue l'élément mobile 47 et se présente sous la forme d'une structure circulaire disposée à l'intérieur de l'anneau formé par les éléments magnétocaloriques 3. L'arrangement magnétique 5 est en rotation autour de l'axe central A et comporte des zones aimantées 8 sous forme d'aimants de polarités différentes qui interagissent aves les pistons 4 réalisés, au moins en partie, en un matériau magnétique ou comprennent un tel matériau magnétique.

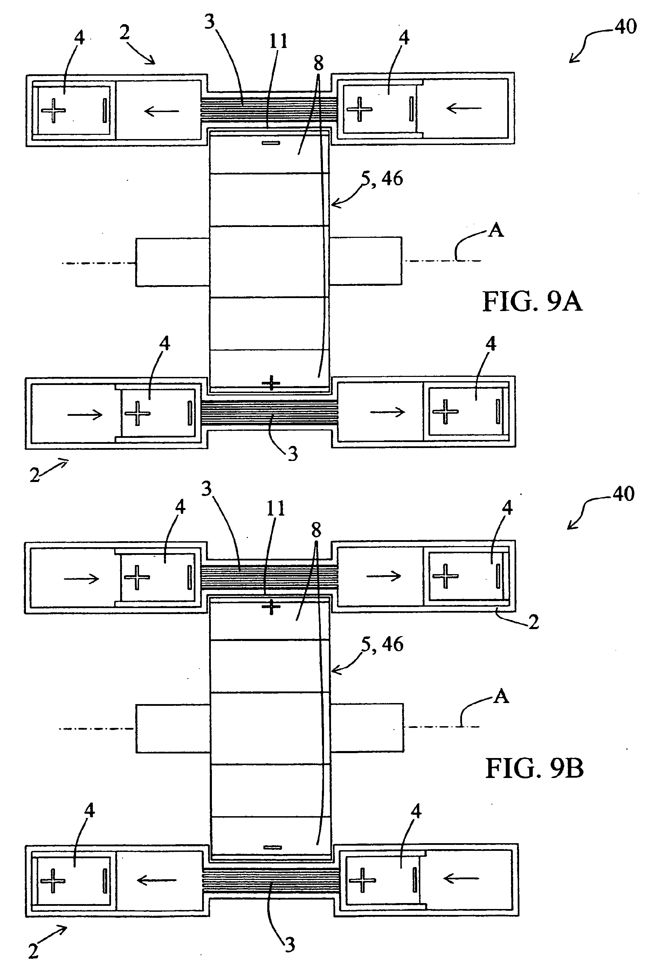

Pour des raisons de simplification, les figures 8, 9A, 9B et 10 représentent uniquement deux modules thermiques 2. Les figures 9A et 9B représentent en outre le générateur magnétocalorique dans deux positions différentes de l'arrangement magnétique 5. La figure 9A représente une première position dans laquelle le fluide disposé dans le module thermique 2 supérieur s'est déplacé vers la gauche, l'aimant 8 négatif de l'arrangement magnétique 5 ayant attiré le piston 4 situé du côté droit sur la figure et repoussé le piston 4 situé du côté gauche, et le fluide disposé dans le module thermique 2 inférieur s'est déplacé vers la droite, l'aimant 8 positif de l'arrangement magnétique 5 ayant attiré le piston 4 situé du côté gauche sur la figure, et repoussé le piston 4 situé du côté droit. La figure 9B représente une seconde position obtenue après rotation de l'arrangement magnétique 5 et dans laquelle le fluide disposé dans le module thermique 2 supérieur s'est déplacé vers la droite, l'aimant 8 positif de l'arrangement magnétique 5 ayant attiré le piston 4 situé du côté gauche sur la figure et repoussé le piston 4 situé du côté droit, et le fluide disposé dans le module thermique 2 inférieur s'est déplacé vers la gauche, l'aimant 8 négatif de l'arrangement magnétique 5 ayant attiré le piston 4 situé du côté droit sur la figure et repoussé le piston situé du côté gauche.

L'arrangement magnétique 5, et donc ses aimants 8, ont la double fonction d'attirer et de repousser les moyens de circulation 4 et de soumettre les éléments magnétocaloriques 3 à une variation de champ magnétique pendant la rotation de l'arrangement magnétique.

Afin d'assurer une manoeuvre efficace des pistons 4, les modules thermiques 2 comportent chacun un renfoncement au niveau des éléments magnétocaloriques 3, formant un renfoncement ou une nervure circulaire 11 et les zones aimantées 8 de l'arrangement magnétique 5 sont sous la forme d'aimants permanents montés sur la structure circulaire formant l'arrangement magnétique et se déplaçant dans ce renfoncement ou cette nervure circulaire 11.

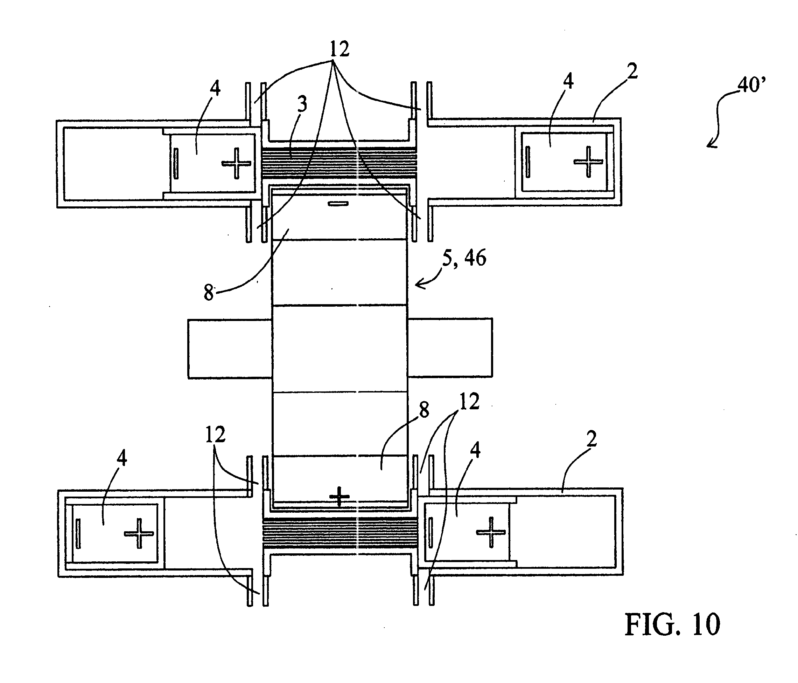

La figure 10 représente une variante de réalisation du générateur magnétocalorique représenté aux figures 8, 9A et 9B, dans laquelle les modules thermiques 2 du générateur magnétocalorique 40' comportent des ouvertures 12 permettant de réaliser une communication fluidique avec des chambres d'échange communes chaude et froide (non représentées). Une telle configuration permet de faciliter le raccordement à un échangeur thermique.

Grâce à l'invention, il est possible de réaliser un générateur magnétocalorique , 40, 40' dans lequel le déplacement du fluide caloporteur dans chaque module thermique 2 est réalisé sans contact entre le moyen de circulation 4 de ce fluide et son moyen de manoeuvre 46. Cela est possible en utilisant la force magnétique entre ces deux moyens qui permet d'obtenir une manoeuvre étanche des moyens de circulation 4 dans chaque module thermique 2. Ainsi, aucun problème d'étanchéité entre le moyen de manoeuvre et les modules thermiques 2 dans lesquels sont intégrés les moyens de circulation ne se pose. En outre, l'absence de contact entre ces différents éléments permet de réduire leur usure et donc d'augmenter leur durée de vie.

En outre, l'utilisation de l'arrangement magnétique 5 en tant que moyen de manoeuvre 6 sans contact permet de réduire l'encombrement d'un tel générateur et d'en simplifier la construction.

### Possibilités d'application industrielle:

Il ressort clairement de cette description que l'invention permet d'atteindre les buts fixés, à savoir proposer un générateur magnétocalorique de construction simple facilitant l'entraînement des moyens de circulation du caloporteur dans les modules thermiques 2 à travers l'élément magnétocalorique 3, garantissant l'étanchéité du générateur magnétocalorique et augmentant sa durée de vie.

Un tel générateur thermique magnétocalorique 40, 40' peut trouver une application aussi bien industrielle que domestique dans le domaine du chauffage, de la climatisation, du tempérage, du refroidissement ou autres, ce, à des coûts compétitifs et dans un faible encombrement.

Toutes les pièces qui composent le générateur magnétocalorique 40, 40' selon l'invention peuvent être réalisées en série selon des processus industriels reproductibles.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Générateur magnétocalorique (40, 40') comportant au moins un module thermique (2), ce module thermique (2) comprenant essentiellement un élément magnétocalorique (3) traversé par un volume défini de fluide caloporteur entraîné selon un déplacement alterné à travers l'élément magnétocalorique (3), de part et d'autre de ce dernier, par l'intermédiaire de deux moyens de circulation (4) disposés dans ledit module thermique (2), ledit générateur magnétocalorique (40, 40') comportant également un arrangement magnétique (5) agencé pour soumettre alternativement chaque élément magnétocalorique (3) à une variation de champ magnétique et créer alternativement, dans ledit élément magnétocalorique (3), un cycle d'échauffement et un cycle de refroidissement, générant la création puis le maintien d'un gradient de température entre les deux extrémités opposées dudit élément magnétocalorique (3), le déplacement alterné du fluide caloporteur étant synchronisé avec la variation du champ magnétique, générateur magnétocalorique (40, 40') **caractérisé en ce que** lesdits moyens de circulation (4) dudit module thermique (2) sont disposés de part et d'autre de l'élément magnétocalorique (3), en regard de ce dernier et sont mis en mouvement par un moyen de manoeuvre (46) sans contact constitué par ledit arrangement magnétique (5) apte à générer un champ magnétique variable auquel sont sensibles lesdits moyens de circulation (4), ledit moyen de manoeuvre (46) comportant au moins un élément mobile (47) entraîné par un actionneur, ledit élément mobile (47) présentant des zones aimantées (8) de polarités différentes dont le passage dans une région proche desdits moyens de circulation (4) correspondant entraîne, par couplage magnétique, le déplacement ou la déformation desdits moyens de circulation (4).

2. Générateur magnétocalorique, selon la revendication 1, **caractérisé en ce que** les zones aimantées (8) de chaque élément mobile (47) sont constituées par des aimants permanents et **en ce que** chaque moyen de circulation (4) est réalisé, au moins en partie, en un matériau magnétique ou comprend un tel matériau magnétique.

3. Générateur magnétocalorique, selon l'une quelconque des revendications précédentes, **caractérisé en ce qu'**au moins un moyen de circulation (4) dudit module thermique (2) est un piston.

4. Générateur magnétocalorique, selon l'une quelconque des revendications 1 à 2, **caractérisé en ce qu'**au moins un moyen de circulation (4) dudit module thermique (2) est une membrane susceptible de se déformer sous l'effet du champ magnétique du moyen de manoeuvre sans contact, cette déformation entraînant le déplacement du fluide caloporteur dans le module thermique (2) concerné.

5. Générateur magnétocalorique, selon l'une quelconque des revendications précédentes, comportant plusieurs modules thermiques (2) adjacents les uns aux autres de manière à former une structure circulaire dans laquelle les éléments magnétocaloriques (3) sont disposés en cercle autour d'un axe central (A), **caractérisé en ce que** l'arrangement magnétique (5) est sous la forme d'une structure circulaire (47) disposée à l'intérieur d'un anneau formé par les éléments magnétocaloriques (3) et en rotation autour de l'axe central (A) des éléments magnétocaloriques (3), ladite structure circulaire comportant des zones aimantées (8) de polarités différentes et **en ce que** les moyens de circulation (4) sont réalisés, au moins en partie, en un matériau magnétique ou comprennent un tel matériau magnétique et **en ce que** les modules thermiques (2) comportent un renfoncement au niveau des éléments magnétocaloriques (3), de manière à former un renfoncement circulaire (11) dans lequel circulent les zones aimantées (8) de l'arrangement magnétique (5) lors de sa rotation.

6. Générateur magnétocalorique comportant au moins deux modules thermiques (2), selon l'une quelconque des revendications précédentes, **caractérisé en ce que** chaque module thermique (2) est en communication fluidique avec une chambre d'échange chaude commune et une chambre d'échange froide commune de sorte que le déplacement alternatif et simultané des moyens de circulation (4) dans chaque module thermique (2) déplace alternativement le fluide caloporteur à travers les éléments magnétocaloriques (3) et respectivement en direction de la chambre d'échange chaude commune lors d'un cycle de réchauffement et en direction de la chambre d'échange froide commune lors d'un cycle de refroidissement.

## Claims

1. Magnetocaloric generator (40, 40') comprising at least one thermal module (2), this thermal module (2) comprising essentially a magnetocaloric element (3) through which flows a defined volume of heat transfer fluid put in alternating circulation through the magnetocaloric element (3), to both sides of the latter, by means of two circulation means (4) arranged in said thermal module (2), said magnetocaloric generator (40, 40') comprising also a magnetic arrangement (5) intended for subjecting alternately each magnetocaloric element (3) to a magnetic field variation and creating alternately in said magnetocaloric element (3) a heating cycle and a cooling cycle, generating the creation and then maintaining a temperature gradient between the two opposite ends of said magnetocaloric element (3), the alternating circulation of the heat transfer fluid being synchronized with the magnetic field variation, magnetocaloric generator (40, 40') **characterized in that** said circulation means (4) of said thermal module (2) are arranged on both sides of the magnetocaloric element (3), in front of the latter, and are put in motion by contactless actuation means (46) formed by said magnetic arrangement (5) that is able to generate a variable magnetic field to which said circulation means (4) are sensitive, said actuation means (46) comprising at least one mobile element (47) driven by an actuator, said mobile element (47) having magnetized zones (8) with different polarities, whose passage in an area close to corresponding said circulation means (4) brings about, by magnetic coupling, the displacement or the deformation of said circulation means (4).

2. Magnetocaloric generator according to claim 1, **characterized in that** the magnetized zones (8) of each mobile element (47) are made up of permanent magnets and **in that** each circulation means (4) is made, at last partly, out of a magnetic material or comprises such magnetic material.

3. Magnetocaloric generator according to any of the previous claims, **characterized in that** at least one circulation means (4) of said thermal module (2) is a piston.

4. Magnetocaloric generator according to any of claims 1 to 2, **characterized in that** at least one circulation means (4) of said thermal module (2) is a membrane liable to deform under the effect of the magnetic field of the contactless actuation means, this deformation leading to the displacement of the heat transfer fluid in the concerned thermal module (2).

5. Magnetocaloric generator according to any of the previous claims, comprising several thermal modules (2) adjacent to each other in order to form a circular structure in which the magnetocaloric elements (3) are arranged in a circle around a central axis (A), **characterized in that** the magnetic arrangement (5) is in the shape of a circular structure (47) arranged inside of a ring formed by the magnetocaloric elements (3) and rotating around the central axis (A) of the magnetocaloric elements (3), said circular structure comprising magnetized zones (8) with different polarities, **in that** the circulation means (4) are made, at last partly, out of a magnetic material or comprise such magnetic material and **in that** the thermal modules (2) comprise a recess in front of the magnetocaloric elements (3) in order to form a circular recess (11) in which the magnetized areas (8) of the magnetic arrangement (5) are circulating when the latter is rotating.

6. Magnetocaloric generator comprising at least two thermal modules (2) according to any of the previous claims, **characterized in that** each thermal module (2) is in fluidic communication with a common hot exchange chamber and with a common cold exchange chamber, so that the alternating and simultaneous displacement of the circulation means (4) in each thermal module (2) moves alternatively the heat transfer fluid through the magnetocaloric elements (3) and respectively towards the common hot exchange chamber during a heating cycle and towards the common cold exchange chamber during a cooling cycle.

## Patentansprüche

1. Magnetokalorischer Generator (40, 40') bestehend aus zumindest einem Wärme-Modul (2), wobei dieses Wärme-Modul (2) im Wesentlichen ein magnetokalorisches Element (3) beträgt, welches von einem festgelegten Volumen Wärmeübertragungsfluid durchströmt wird, das durch zwei in dem besagten Wärme-Modul (2) angeordnete Zirkulationsmittel (4) in einer Hin-und-Her-Bewegung durch das magnetokalorische Element (3) hindurch getrieben wird, zu beiden Seiten dieses, wobei der besagte magnetokalorische Generator (40, 40') ebenfalls eine magnetische Anordnung (5) beträgt, die angeordnet ist, um abwechselnd jedes magnetokalorische Element (3) einer Magnetfeld-Variation auszusetzen und abwechselnd in dem besagten magnetokalorischen Element (3) einen Heiz-Zyklus und einen Kühl-Zyklus zu erzeugen, wodurch ein Temperatur-Gradient zwischen den beiden entgegen gesetzten Enden des besagten magnetokalorischen Elements (3) erzeugt und anschließend erhalten wird, wobei die abwechselnde Bewegung des Wärmeübertragungsfluids mit der Magnetfeld-Variation synchronisiert ist, **dadurch gekennzeichnete**r magnetokalorischer Generator (40, 40'), dass die besagten Zirkulationsmittel (4) des besagten Wärme-Moduls (2) beidseitig des magnetokalorischen Elements (3) und gegenüber vom diesem angeordnet sind, und durch ein kontaktloses Antriebsmittel (46) in Bewegung gesetzt werden, das aus der besagten magnetischen Anordnung (5) besteht, die in der Lage ist, ein variables Magnetfeld zu erzeugen gegen welches die besagten Zirkulationsmittel (4) empfindlich sind, wobei das besagte Antriebsmittel (46) zumindest ein durch einen Antrieb angetriebenes bewegliches Element (47) beträgt, wobei das besagte bewegliche Element (47) magnetisierte Bereiche (8) mit unterschiedlichen Polaritäten aufweist, deren Durchgang in einem Gebiet in der Nähe der entsprechenden besagten Zirkulationsmittel (4) durch magnetische Kopplung die Bewegung oder die Verformung der besagten Zirkulationsmittel (4) verursacht.

2. Magnetokalorischer Generator nach Anspruch 1, **dadurch gekennzeichnet, dass** die magnetisierten Bereiche (8) jedes beweglichen Elements (47) aus Permanentmagneten bestehen und dadurch, dass jedes Zirkulationsmittel (4) mindestens zum Teil aus einem magnetischen Material hergestellt ist oder ein solches magnetisches Material beträgt.

3. Magnetokalorischer Generator nach einem beliebigen der vorhergehenden Ansprüche, **dadurch gekennzeichnet, dass** zumindest ein Zirkulationsmittel (4) des besagten Wärme-Moduls (2) ein Kolben ist.

4. Magnetokalorischer Generator nach einem beliebigen der Ansprüche 1 bis 2, **dadurch gekennzeichnet, dass** zumindest ein Zirkulationsmittel (4) des besagten Wärme-Moduls (2) eine Membran ist, die sich unter dem Einfluss des Magnetfelds des kontaktlosen Antriebsmittels verformen kann, wobei diese Verformung die Bewegung des Wärmeübertragungsfluids in dem betroffenen Wärme-Modul (2) zur Folge hat.

5. Magnetokalorischer Generator nach einem beliebigen der vorhergehenden Ansprüche, bestehend aus mehreren aneinanderliegenden Wärme-Modulen (2), die eine kreisförmige Struktur bilden, in der die magnetokalorischen Elemente (3) auf einem Kreis um eine Mittelachse (A) angeordnet sind, **dadurch gekennzeichnet, dass** die magnetische Anordnung (5) die Form einer kreisförmigen Struktur (47) annimmt, die innerhalb eines durch die magnetokalorischen Elemente (3) geformten Rings angeordnet ist und um die Mittelachse (A) der magnetokalorischen Elemente (3) dreht, wobei die besagte kreisförmige Struktur magnetisierte Bereiche (8) mit unterschiedlichen Polaritäten aufweist, dadurch, dass die Zirkulationsmittel (4) mindestens zum Teil aus einem magnetischen Material hergestellt sind oder ein solches magnetisches Material betragen, und dadurch, dass die Wärme-Module (2) auf der Höhe der magnetokalorischen Elemente (3) eine Vertiefung aufweisen, um eine kreisförmige Vertiefung (11) zu bilden, in der die magnetisierten Bereiche (8) der magnetischen Anordnung (5) während deren Drehung zirkulieren.

6. Magnetokalorischer Generator bestehend aus mindestens zwei Wärme-Modulen (2) nach einem beliebigen der vorhergehenden Ansprüche, **dadurch gekennzeichnet, dass** jedes Wärme-Modul (2) mit einer gemeinsamen warmen Austauschkammer und mit einer gemeinsamen kalten Austauschkammer in Fluidverbindung steht, so dass die abwechselnde und simultane Bewegung der Zirkulationsmittel (4) in jedem Wärme-Modul (2) das Wärmeübertragungsfluid abwechselnd durch die magnetokalorischen Elemente (3) treibt, während eines Heiz-Zyklus in Richtung der gemeinsamen warmen Austauschkammer bzw. während eines Kühl-Zyklus in Richtung der gemeinsamen kalten Austauschkammer.
